# EUROPEAN PATENT SPECIFICATION

(11) **EP 2 685 543 B1**
(45) Date of publication and mention of the grant of the patent: **09.08.2017**
(21) Application number: 12188459.7
(22) Date of filing: 13.10.2012
(51) Int. Cl.: H01M 10/6551, H01M 10/6554, H01M 10/613, H01M 2/20

(54) **Battery apparatus**
Batterievorrichtung
Bloc batterie

(30) Priority: 10.07.2012 TW 101124795
(43) Date of publication of application: 15.01.2014
(73) Proprietor: Lite-On Technology Corporation, Taipei City 11492 (TW)
(72) Inventor: Lu, Cheng-Ji, Taipei City 11492 (TW); Cheng, Ming-Yao, Taipei City 11494 (TW); Chen, Chien-Chu, Taipei City 11494 (TW)
(74) Representative: Altenburg, Bernardus Stephanus Franciscus

(56) References cited:
- EP-A1- 2 357 689
- DE-A1-102008 059 967
- DE-A1-102009 035 487

## Description

### Field

The exemplary embodiments of the present invention relate to a thermal management design of a battery apparatus that conducts the heat of the battery units generated inside the battery apparatus along a direction of high-efficiency thermal conduction.

### Background

A battery apparatus is usually composed of tens to hundreds of battery units, and for saving space, the battery units are arranged close to one another; thus, heat does not dissipate easily from the battery apparatus. In addition, when the battery apparatus is operated at high power, the temperature distribution inside the battery apparatus will age the battery units inside the battery apparatus to different degrees, and such unequal aging affects the life and efficiency of the entire battery apparatus.

To solve the problem of heat dissipation in the battery apparatus, a liquid/air cooling heat dissipation apparatus can be used. However, because of the cost and the practicability of assembling the heat dissipation apparatus on a huge system, the aforementioned solution is not ideal. In addition, adding an energy-consuming active heat dissipation apparatus to a battery system is inconsistent with the spirit of energy conservation and environmental protection.

Therefore, a new battery apparatus has to be provided for evenly dissipating the heat of the battery units in the battery apparatus without the use of an additional heat dissipating apparatus in order to solve the problem existing in the prior arts.

EP2357689 discloses a battery module comprising at least one assembled battery having a cooling face and an assemble of a plurality of electric cells and separators; a cooling plate through which refrigerant is made to flow, the cooling plate being disposed in contact with the assembled battery; and a press device disposed to press the assembled battery from an opposite surface side of the assembled battery to the cooling face so that the cooling plate is brought into contact with the cooling face under pressure.

DE102009035487 discloses a battery comprising a heat conductive plate arranged in a battery case; multiple cells electrically interconnected, the cells being arranged in recesses by a holding plate; and a supporting element made of hardening material and attached in a gap among the cells and one of the recesses.

### Summary

It is a primary object of the present invention to provide a battery apparatus in which the battery apparatus conducts heat generated by the battery units along a high-efficiency thermal conduction direction.

To achieve the above object, a battery apparatus of the present invention is disclosed, the apparatus comprising a frame body, a plurality of battery units, a first electrically conductive sheet, a first electric-insulated thermally conductive pad, and a first thermally conductive panel. The frame body comprises an upper surface and a first lateral plane; the plurality of battery units are accommodated in the frame body, and a first terminal of each battery unit is exposed to the upper surface. The first electrically conductive sheet touches the upper surface and connects with the first terminal of each battery unit exposed to the upper surface for conducting the electric currents of the plurality of battery units, the first electric-insulated thermally conductive pad is disposed on the first conductive sheet, the first thermally conductive panel is disposed on the first electric-insulated thermally conductive pad, and the first thermally conductive panel touches the first lateral plane.

According to one embodiment of the present invention, the frame body further comprises a second lateral plane opposite to the first lateral plane and a third lateral plane, wherein the first thermally conductive panel touches the upper surface, the first lateral plane, and the second lateral plane; the first electrically conductive sheet comprises a plurality of electrical connection ends, the first electrically conductive sheet extends to the third lateral plane, and the plurality of electrical connection ends are exposed to the third lateral plane; and the first thermally conductive panel is U-shaped.

According to one embodiment of the present invention, the frame body further comprises a plurality of convex dots disposed on the upper surface, and the first electrically conductive sheet comprises a plurality of openings, and each opening engages with the convex dot correspondingly.

According to one embodiment of the present invention, the battery apparatus further comprises a thermally conductive copper sheet connected with the plurality of electrical connection ends.

According to one embodiment of the present invention, part of the first electric-insulated thermally conductive pad is exposed to the first thermally conductive panel.

According to one embodiment of the present invention, the battery apparatus further comprises a thermally conductive copper sheet connected with the plurality of electrical connection ends.

According to another embodiment of the present invention, the first electrically conductive sheet comprises a plurality of electrical connection ends, the frame body further comprises a third lateral plane, the first electrically conductive sheet extends to the third lateral plane, and the plurality of electrical connection ends are exposed to the third lateral plane; the first thermally conductive panel is L-shaped.

According to still another embodiment of the present invention, the frame body further comprises a lower surface and a second lateral plane opposite to the first lateral plane, and a second terminal of each battery unit is exposed to the lower surface. The battery apparatus further comprises a second electrically conductive sheet, a second electric-insulated thermally conductive pad, and a second thermally conductive panel, wherein the second electrically conductive sheet touches the lower surface and connects with the second terminal of each battery unit exposed to the lower surface for conducting the electric currents of the plurality of battery units. The second electric-insulated thermally conductive pad is disposed on the second conductive sheet; the second thermally conductive panel is disposed on the second electric-insulated thermally conductive pad, and the second thermally conductive panel touches the second lateral plane. In addition, the second thermally conductive panel does not touch the first thermally conductive panel.

According to another embodiment of the present invention, the second electrically conductive sheet comprises a plurality of electrical connection ends, the frame body further comprises a fourth lateral plane, the second electrically conductive sheet extends to the fourth lateral plane, and the plurality of electrical connection ends are exposed to the fourth lateral plane.

### Brief description of the drawings

The exemplary embodiment(s) of the present invention will be understood more fully from the detailed description given below and from the accompanying drawings of various embodiments of the invention, which, however, should not be taken to limit the invention to the specific embodiments, but are for explanation and understanding only.
Figure 1 is an exploded view diagram of the first embodiment of a battery apparatus according to the present invention.
Figure 2 is a cross-section schematic diagram of the first embodiment of the battery apparatus according to the present invention.
Figure 3 is a schematic diagram of the first embodiment of the battery apparatus according to the present invention.
Figure 4 is a schematic diagram of the combination of a plurality of battery apparatuses according to the present invention.
Figure 5 is an exploded view diagram of the second embodiment of the battery apparatus according to the present invention.
Figure 6 is a cross-section schematic diagram of the second embodiment of the battery apparatus according to the present invention.

### Detailed Description

The advantages and innovative features of the invention will become more apparent from the following detailed descriptions when taken together with the accompanying drawings.

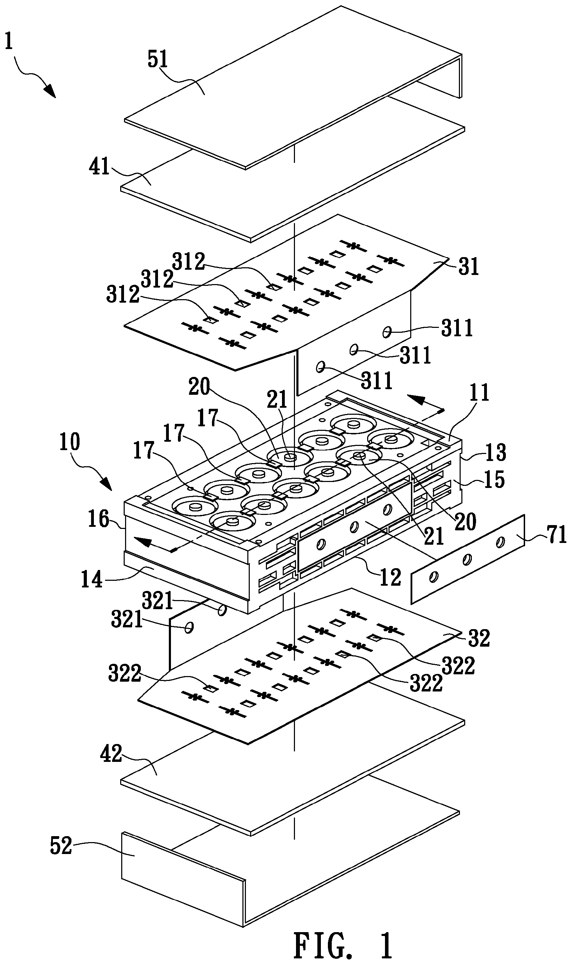

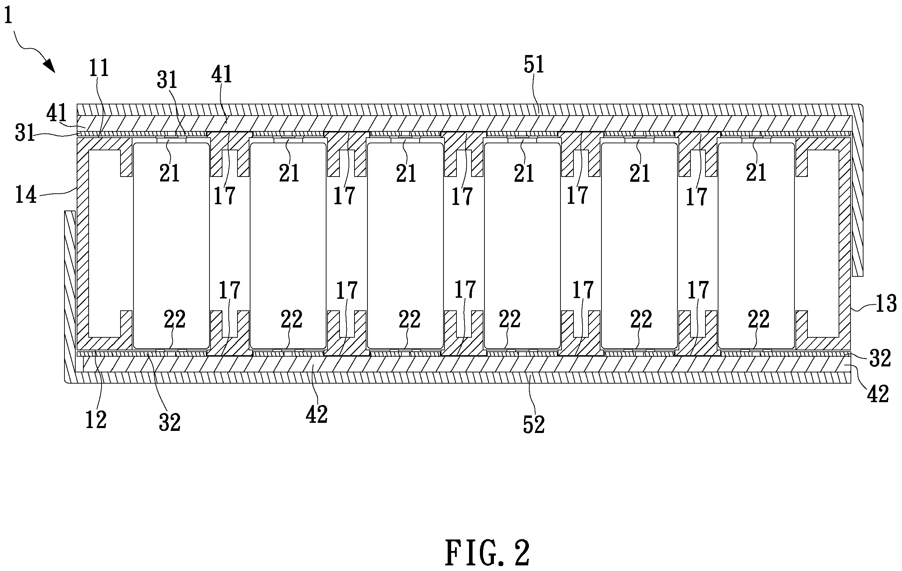

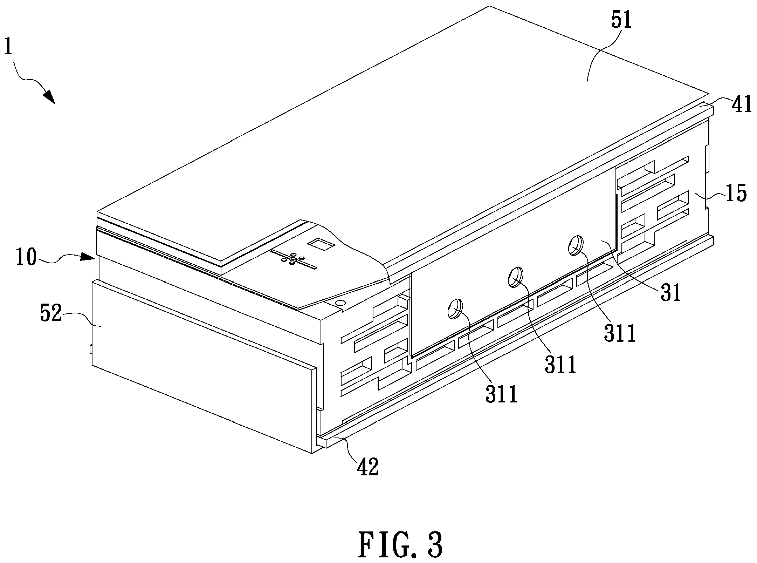

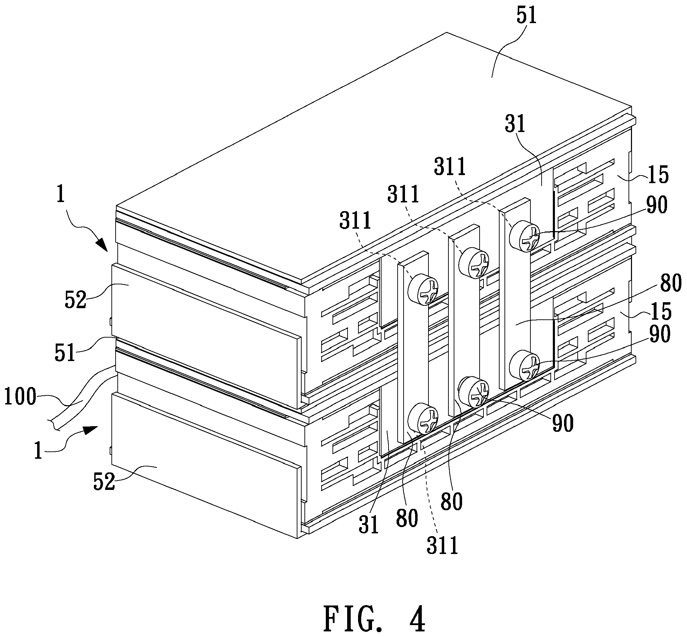

Please refer to FIG. 1 to FIG. 4, which relate to the first embodiment of the battery apparatus 1 of the present invention. FIG. 1 is an exploded view diagram of the first embodiment of the battery apparatus according to the present invention. FIG. 2 is a cross-section schematic diagram of the first embodiment of the battery apparatus according to the present invention. FIG. 3 is a schematic diagram of the first embodiment of the battery apparatus according to the present invention. FIG. 4 is a schematic diagram of the combination of a plurality of battery apparatuses according to the present invention.

As shown in FIG. 1, in the first embodiment, the battery apparatus 1 of the present invention comprises a frame body 10, a plurality of battery units 20, a first electrically conductive sheet 31, a second electrically conductive sheet 32, a first electric-insulated thermally conductive pad 41, a second electric-insulated thermally conductive pad 42, a first thermally conductive panel 51, and a second thermally conductive panel 52.

As shown in FIG. 1, in the first embodiment, the frame body 10 comprises a upper surface 11, a lower surface 12, a first lateral plane 13, a second lateral plane 14, a third lateral plane 15, a fourth lateral plane 16, and a plurality of convex dots 17, wherein the upper surface 11 is opposite to the lower surface 12. The first lateral plane 13 is opposite to the second lateral plane 14; the third lateral plane 15 is opposite to the fourth lateral plane 16; and as shown in FIG. 2, the plurality of convex dots 17 are disposed on the upper surface 11 and the lower surface 12, respectively.

As shown in FIG. 1 and FIG. 2, the first electrically conductive sheet 31 and the second electrically conductive sheet 32 of the present invention both are nickel sheets, and the thicknesses of the sheets are less than 0.5 mm. Each battery unit 20 comprises a first terminal 21 and a second terminal 22. The first electric-insulated thermally conductive pad 41 and the second electric-insulated thermally conductive pad 42 are made of an electric-insulated thermally conductive material. The first thermally conductive panel 51 and the second thermally conductive panel 52 are L-shaped, and the first thermally conductive panel 51 and the second thermally conductive panel 52 are aluminum panels.

As shown in FIG. 1 and FIG. 2, each battery unit 20 is accommodated in the frame body 10, the first terminal 21 is exposed to the upper surface 11, and the second terminal 22 is exposed to the lower surface 12. In this embodiment, the first terminal 21 is an electrical positive electrode, and the second terminal 22 is an electrical negative electrode.

As shown in FIG. 1 and FIG. 2, in this embodiment, the first electrically conductive sheet 31 comprises three electrical connection ends 311 and a plurality of openings 312. The first electrically conductive sheet 31 touches the upper surface 11 and the third lateral plane 15 of the frame body 10. The first electrically conductive sheet 31 touches each first terminal 21 exposed to the upper surface 11 in the battery unit 20, thereby conducting the electric current of each first terminal 21 to three electrical connection ends 311 exposed to the third lateral plane 15 (as shown in FIG. 3), and thus providing an electrical connection to another battery apparatus 1 (as shown in FIG. 4) or an external apparatus. As shown in FIG. 1 and FIG. 2, each opening 312 engages correspondingly with the convex dot 17 disposed on the upper surface 11.

By employing the plurality of electrical connection ends 311, the current flowing through each electrical connection end 311 can be lower than current flowing through a single connecting end of the prior art when the battery apparatus 1 is working, thereby lowering the temperature of the electrical connection ends 311, and thus, since the electric current will not accumulate at a single electrical connection end 311, the electrical connection end 311 will not overheat. Using the plurality of electrical connection ends 311 can also increase the operating stability of the battery apparatus 1 of the present invention, since when one of the electrical connection ends 311 is broken, the electric current of each battery unit 20 will be redistributed to other electrical connection ends 311 that are still normally working.

In addition, for improving the heat dissipating efficiency of the plurality of electrical connection ends 311, as shown in FIG. 1, the thermally conductive copper sheet 71 of the battery apparatus 1 touches the plurality of electrical connection ends 311, and the plurality of electrical connection ends 311 can be cooled by the copper sheet due to its high thermal conductivity. In this embodiment, the thermally conductive copper sheet 71 is disposed between the plurality of electrical connection ends 311 and the third lateral plane 15. However, the present invention is not limited to the aforementioned examples, and the thermally conductive copper sheet 71 could also be disposed between the second electrically conductive sheet 32 and the plurality of electrical connection ends 321.

As shown in FIG. 1 and FIG. 2, in this embodiment, the second electrically conductive sheet 32 comprises three electrical connection ends 321 and a plurality of openings 322. The second electrically conductive sheet 32 touches the lower surface 12 and the fourth lateral plane 16 of the frame body 10, and the second electrically conductive sheet 32 touches each second terminal 22 exposed to the lower surface 12 in the battery unit 20, thereby conducting the electric current of each second terminal 22 to the plurality of electrical connection ends 321 exposed to the fourth lateral plane 16, and thus providing an electrical connection to another battery apparatus (not shown in the figure; please refer to FIG. 4) or an external apparatus. As shown in FIG. 1 and FIG. 2, each opening 322 engages correspondingly with a convex dot 17 disposed on the lower surface 12.

As shown in FIG. 1, the first electric-insulated thermally conductive pad 41 of the present embodiment is disposed on the first electrically conductive sheet 31, and as shown in FIG. 2, the first electric-insulated thermally conductive pad 41 touches not only the first electrically conductive sheet 31 but also the convex dot 17 on the upper surface 11. Furthermore, for improving the electrical isolation level of the battery apparatus 1 according to the present invention, as shown in FIG. 3, the first electric-insulated thermally conductive pad 41 is exposed to the first thermally conductive panel 51.

As shown in FIG. 1, the second electric-insulated thermally conductive pad 42 of the present embodiment is disposed on the second electrically conductive sheet 32. As shown in FIG. 2, the second electric-insulated thermally conductive pad 42 touches not only the second electrically conductive sheet 32 but also the convex dot 17 on the lower surface 12. Furthermore, for improving the electrical isolation level of the battery apparatus 1 according to the present invention, the second electric-insulated thermally conductive pad 42 is exposed to the second thermally conductive panel 52.

As shown in FIG. 1, the first thermally conductive panel 51 is disposed on the first electric-insulated thermally conductive pad 41 and closely combined with the first electric-insulated thermally conductive pad 41, thereby conducting the heat of each battery unit 20 in the frame body 10. The first thermally conductive panel 51 touches the first lateral plane 13. It is noted that when the first electric-insulated thermally conductive pad 41, which is touched directly by the first thermally conductive panel 51, is broken, the first thermally conductive panel 51 will then touch the convex dot 17 on the upper surface 11 but not the first electrically conductive sheet 31. By the separation of the convex dot 17, electrical leakage can be avoided because the first electrically conductive sheet 31 cannot be touched by the first thermally conductive panel 51 when the first electric-insulated thermally conductive pad 41 is broken.

As shown in FIG. 1, the second thermally conductive panel 52 is disposed on the second electric-insulated thermally conductive pad 42 and closely combined with the second electric-insulated thermally conductive pad 42, thereby conducting the heat of each battery unit 20 in the frame body 10. The second thermally conductive panel 52 touches the second lateral plane 14. It is noted that if the second electric-insulated thermally conductive pad 42, which is touched directly by the second thermally conductive panel 52, is broken, the second thermally conductive panel 52 will then touch the convex dot 17 on the lower surface 12 but not the second electrically conductive sheet 32, and electrical leakage can be avoided. It is noted that, as shown in FIG. 2, in order to avoid the risk of short circuit when the electric leakage happens, the first thermally conductive panel 51 should not touch the second thermally conductive panel 52.

As shown in FIG. 2, the first thermally conductive panel 51 and the second thermally conductive panel 52 are disposed respectively on the first terminal 21 and the second terminal 22 of each battery unit 20. Because the direction (the forward current direction) is a high heat-dissipation direction in the battery apparatus 1, the heat generated in each battery unit 20 can be conducted away effectively when the battery unit 20 is working, and thereby is the heat-dissipation efficiency raised. Each battery unit 20 in the frame body 10 will be covered by the first thermally conductive panel 51 and the second thermally conductive panel 52 of the present invention, and thus the heat of the battery unit 20 located at the center of the battery apparatus 1 can be conducted away, thereby solving the problem of the prior arts that heat cannot dissipate easily from the center portion of the battery apparatus, which leads to uneven temperature distribution inside the battery apparatus.

As shown in FIG. 4, when the plurality of battery apparatuses 1 connect to each other, the first thermally conductive panel 51 and the second thermally conductive panel 52 of each battery apparatus 1 will touch the first thermally conductive panel 51 and the second thermally conductive panel 52 of the adjacent battery apparatuses 1, thereby conducting the heat of each battery apparatus 1 to the casing and achieving the object of heat dissipation. In addition, the first thermally conductive panel 51 and the second thermally conductive panel 52 does not only conduct away the internal heat of the battery apparatus 1; when the plurality of battery apparatuses 1 connect to each other and thereby form a power supply system (as shown in FIG. 4), the first thermally conductive panel 51 and the second thermally conductive panel 52 can also form a heat conducting route in the power supply system, and the heat of the battery apparatus 1 located at the center of the power supply system can thus be conducted away via the heat conducting route.

As shown in FIG. 4, after the battery apparatus 1 of the present invention connects with the plurality battery apparatuses 1, a battery power supply system can be formed. One practical embodiment of electrically connecting the plurality of battery apparatuses 1 would be: using a copper bus 80 to touch the plurality of electrical connection ends 311 of the first electrically conductive sheet 31 of two battery apparatuses 1, using a screw 90 to fix them, and electrically connecting the plurality of battery apparatuses 1 of the present invention in parallel, and then electrically connecting to an external apparatus via a cable line 100 so as to allow the plurality of battery apparatuses 1 to provide electric power to the external apparatus. However, the present invention is not limited to the aforementioned example; the plurality of battery apparatuses 1 could also be connected in series, and the connection could be extended depending on the system demand, and the implementation of electrically connecting the plurality of battery apparatuses 1 is not limited to the aforementioned embodiment.

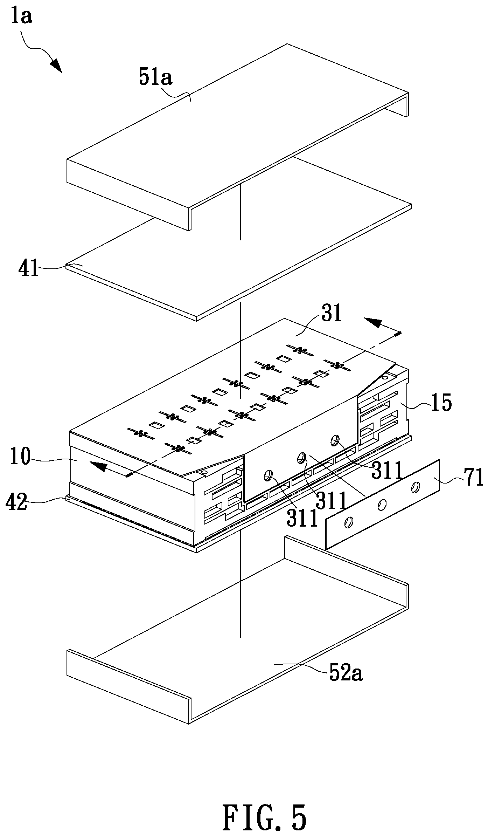

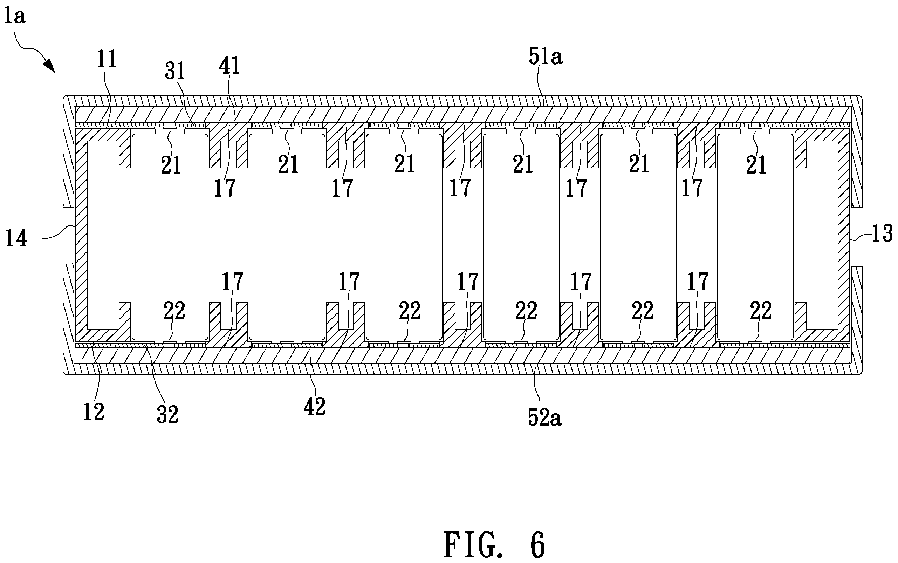

Following please refer to FIG. 5 and FIG. 6 in order to understand the second embodiment of the battery apparatus 1a of the present invention. Figure 5 is an exploded view diagram of the second embodiment of the battery apparatus according to the present invention. Figure 6 a cross-section schematic diagram of the second embodiment of the battery apparatus according to the present invention.

As shown in FIG. 5, the biggest difference between the second embodiment of the battery apparatus 1a and the first embodiment is that the first thermally conductive panel 51a and the second thermally conductive panel 52a are both U-shaped. The first thermally conductive panel 51a respectively touches the upper surface 11, the first lateral plane 13, and the second lateral plane 14 of the frame body 10. However, it is noted that, as shown in FIG. 6, in order to avoid the circuit short of the battery apparatus 1a of the present invention, the first thermally conductive panel 51a does not touch the second thermally conductive panel 52a. In addition, as shown in FIG. 5, for facilitating the heat dissipation of the electrical connection end 311, the thermally conductive copper sheet 71 touches only the exposed surface of the plurality of electrical connection ends 311.

## Claims

1. A battery apparatus (1) comprising:
a frame body (10), comprising an upper surface (11) and a first lateral plane (13);
a plurality of battery units (20), accommodated in the frame body (10), and a first terminal (21) of each battery unit (20) being exposed to the upper surface (11);
a first electrically conductive sheet (31), touching the upper surface (11) and connecting with the first terminal (21) of each battery unit (20) exposed to the upper surface (11) for conducting out the electric currents of the plurality of battery units (20);
a first electric-insulated thermally conductive pad (41) disposed on the first conductive sheet (31); and
a first thermally conductive panel (51), disposed on the first electric-insulated thermal conducting pad (41), and the first thermally conductive panel (51) touching the first lateral plane (13).

2. The battery apparatus as claimed in claim 1, wherein the frame body (10) further comprises a second lateral plane (14) opposite to the first lateral plane (13), and the first thermally conductive panel (51) touches
- the upper surface (11),
- the first lateral plane (13), and
- the second lateral plane (14)
simultaneously.

3. The battery apparatus as claimed in claim 1 or 2, wherein the first thermally conductive panel (51) is U-shaped.

4. The battery apparatus as claimed in claim 1, 2 or 3, wherein the first electrically conductive sheet (31) comprises a plurality of electrical connection ends (311), the frame body (10) further comprises a third lateral plane (15), the first electrically conductive sheet (31) extends to the third lateral plane (15), and the plurality of electrical connection ends (311) are exposed to the third lateral plane (15).

5. The battery apparatus as claimed in claim 4 or any of the claims 1 to 4, wherein the frame body (10) further comprises a plurality of convex dots (17) disposed on the upper surface (11), and the first electrically conductive sheet (31) comprises a plurality of openings (312), and each opening (312) engages with the convex dot (17) correspondingly.

6. The battery apparatus as claimed in claim 4 or any of the claims 1 to 5, further comprising a thermally conductive copper sheet (71) connected with the plurality of electrical connection ends (311).

7. The battery apparatus as claimed in claim 4 or any of the claims 1 to 6, wherein part of the first electric-insulated thermally conductive pad (41) is exposed to the first thermally conductive panel (51).

8. The battery apparatus as claimed in claim 1 or 2, wherein the first thermally conductive panel (51) is L-shaped.

9. The battery apparatus as claimed in claim 8, wherein the first electrically conductive sheet (31) comprises a plurality of electrical connection ends (311), the frame body (10) further comprises a third lateral plane (15), the first electrically conductive sheet (31) extends to the third lateral plane (15), and the plurality of electrical connection ends (311) are exposed to the third lateral plane (15).

10. The battery apparatus as claimed in claim 8 or 9, wherein the frame body (10) further comprises a plurality of convex dots (17) disposed on the upper surface (11), and the first electrically conductive sheet (31) comprises a plurality of openings (312), and each opening (312) engages with the convex dot (17) correspondingly.

11. The battery apparatus as claimed in claim 8, 9 or 10, further comprising a thermally conductive copper sheet (71) connected with the plurality of electrical connection ends (311).

12. The battery apparatus as claimed in claim 8, 9, 10 or 11, wherein part of the first electric-insulated thermally conductive pad (41) is exposed to the first thermally conductive panel (51).

13. The battery apparatus as claimed in claim 1 or 2, wherein the frame body further comprises a lower surface (12) and a second lateral plane (14) opposite to the first lateral plane (13), and a second terminal (22) of each battery unit (20) is exposed to the lower surface (12);
the battery apparatus (1) further comprises a second electrically conductive sheet (32), a second electric-insulated thermally conductive pad (42), and a second thermally conductive panel (52), wherein the second electrically conductive sheet (32) touches the lower surface (12) and connects with the second terminal (22) of each battery unit (20) exposed to the lower surface (12) for conducting the electric currents of the plurality of battery units (20);
the second electric-insulated thermally conductive pad (42) disposed on the second conductive sheet (32);
the second thermally conductive panel (52) disposed on the second electric-insulated thermally conductive pad (42), and the second thermally conductive panel (52) touching the second lateral plane (14).

14. The battery apparatus as claimed in claim 13, wherein the second electrically conductive sheet (32) comprises a plurality of electrical connection ends (321), the frame body (10) further comprises a fourth lateral plane (16), the second electrically conductive sheet (32) extends to the fourth lateral plane (16), and the plurality of electrical connection ends (321) is exposed to the fourth lateral plane (16).

15. The battery apparatus as claimed in claim 13 or 14, wherein the second thermally conductive panel (52) does not touch the first thermally conductive panel (51).

16. The battery apparatus as claimed in claim 13, 14 or 15, wherein the second thermally conductive panel (52) is L-shaped.

17. The battery apparatus as claimed in claim 14 or any of the claims 13 to 16, wherein part of the second electric-insulated thermally conductive pad (42) is exposed to the second thermally conductive panel (52).

18. The battery apparatus as claimed in claim 14 or any of the claims 13-17, wherein the frame body further comprises a plurality of convex dots (17) disposed on the upper surface (11) and the lower surface (12), the first electrically conductive sheet (31) and the second electrically conductive sheet (32) both comprise a plurality of openings (322), and each opening (322) engages with the convex dot (17) correspondingly.

19. The battery apparatus as claimed in claim 14 or any of the claims 13-18, wherein the second thermally conductive panel (52) connects to the lower surface (12), the first lateral plane (13), and the second lateral plane (14) simultaneously.

20. The battery apparatus as claimed in claim 19 or any of the claims 14 to 18, wherein the second thermally conductive panel (52) is U-shaped.

## Patentansprüche

1. Batterievorrichtung (1), umfassend:
einen rahmenartigen Körper (10), der eine obere Oberfläche (11) und eine erste seitliche Fläche (13) umfasst;
eine Vielzahl von Batterieeinheiten (20), die in dem rahmenartigen Körper (10) angeordnet sind und wobei ein erster Pol (21) jeder Batterieeinheit (20) zur oberen Oberfläche (11) freiliegend ausgerichtet ist;
eine erste elektrisch leitfähige Lage (31), die die obere Oberfläche (11) berührt und mit den ersten Polen (21) jeder Batterieeinheit (20), die zu der oberen Oberfläche (11) freiliegend ausgerichtet sind, verbunden ist, um die elektrischen Ströme der Vielzahl von Batterieeinheiten (20) abzuleiten;
eine erste elektrisch isolierte wärmeleitende Zwischenschicht (41), die auf die erste leitfähige Lage (31) aufgelegt ist; und
eine erste wärmeleitfähige Platte (51), aufgelegt auf die erste elektrisch isolierte wärmeleitfähige Zwischenschicht (41) und wobei die erste wärmeleitfähige Platte (51) die erste seitliche Fläche (13) berührt.

2. Batterievorrichtung wie in Anspruch 1 beansprucht, wobei der rahmenartige Körper (10) weiterhin eine zweite seitliche Fläche (14), der ersten seitlichen Fläche (13) gegenüberliegend, umfasst und wobei die erste wärmeleitfähige Platte (51)
- die obere Oberfläche (11),
- die erste seitliche Fläche (13) und
- die zweite seitliche Fläche (14)
gleichzeitig berührt.

3. Batterievorrichtung wie in den Ansprüchen 1 oder 2 beansprucht, wobei die erste wärmeleitfähige Platte (51) U-förmig ist.

4. Batterievorrichtung wie in den Ansprüchen 1, 2 oder 3 beansprucht, wobei die erste elektrisch leitfähige Lage (31) eine Vielzahl von elektrischen Verbindungsenden (311) umfasst, der rahmenartige Körper (10) weiterhin eine dritte seitliche Fläche (15) umfasst, die erste elektrisch leitfähige Lage (31) sich bis zu der dritten seitlichen Fläche (15) erstreckt und die Vielzahl von elektrischen Verbindungsenden (311) zur dritten seitlichen Fläche (15) freiliegend ausgerichtet sind.

5. Batterievorrichtung wie in Anspruch 4 oder in einem der Ansprüche 1 bis 4 beansprucht, wobei der rahmenartige Körper (10) weiterhin eine Vielzahl konvexer Punkte (17) besitzt, die auf der oberen Oberfläche (11) angeordnet sind, und die erste elektrisch leitfähige Lage (31) eine Vielzahl von Öffnungen (312) umfasst, wobei jede Öffnung (312) mit einem konvexen Punkt (17) entsprechend in Verbindung tritt.

6. Batterievorrichtung wie in Anspruch 4 oder in einem der Ansprüche 1 bis 5 beansprucht, weiterhin umfassend eine wärmeleitfähige Kupferschicht (71), die mit der Vielzahl von elektrischen Verbindungsenden (311) verbunden ist.

7. Batterievorrichtung wie in Anspruch 4 oder in einem der Ansprüche 1 bis 6 beansprucht, wobei ein Teil der ersten elektrisch isolierten wärmeleitfähigen Zwischenschicht (41) der ersten wärmeleitfähigen Platte (51) ausgesetzt ist.

8. Batterievorrichtung wie in den Ansprüchen 1 oder 2 beansprucht, wobei die erste wärmeleitfähige Platte (51) L-förmig ist.

9. Batterievorrichtung wie in Anspruch 8 beansprucht, wobei die erste elektrisch leitfähige Lage (31) eine Vielzahl von elektrischen Verbindungsenden (311) umfasst, der rahmenartige Körper (10) weiterhin eine dritte seitliche Fläche (15) umfasst, die erste elektrische leitfähige Lage (31) sich bis zu der dritten seitlichen Fläche (15) erstreckt und die Vielzahl von elektrischen Verbindungsenden (311) zur dritten seitlichen Fläche (15) freiliegend ausgerichtet sind.

10. Batterievorrichtung wie in Anspruch 8 oder 9 beansprucht, wobei der rahmenartige Körper (10) weiterhin eine Vielzahl konvexer Punkte (17) besitzt, die auf der oberen Oberfläche (11) angeordnet sind, und die erste elektrisch leitfähige Lage (31) eine Vielzahl von Öffnungen (312) umfasst, wobei jede Öffnung (312) mit einem konvexen Punkt (17) entsprechend in Verbindung tritt.

11. Batterievorrichtung wie in den Ansprüchen 8, 9 oder 10 beansprucht, weiterhin umfassend eine wärmeleitfähige Kupferschicht (71), die mit der Vielzahl von elektrischen Verbindungsenden (311) verbunden ist.

12. Batterievorrichtung wie in den Ansprüchen 8, 9, 10 oder 11 beansprucht, wobei ein Teil der ersten elektrisch isolierten wärmeleitfähigen Zwischenschicht (41) der ersten wärmeleitfähigen Platte (51) ausgesetzt ist.

13. Batterievorrichtung wie in Anspruch 1 oder 2 beansprucht, wobei der rahmenartige Körper (10) weiterhin eine untere Oberfläche (12) umfasst und eine zweite seitliche Fläche (14), die der ersten seitlichen Fläche (13) gegenüberliegt, und ein zweiter Pol (22) jeder Batterie, der zur unteren Oberfläche (12) freiliegend ausgerichtet ist;
die Batterievorrichtung (1) umfasst weiterhin eine zweite elektrisch leitfähige Lage (32), eine zweite elektrisch isolierte wärmeleitfähige Zwischenschicht (42) und eine zweite wärmeleitfähige Platte (52), wobei die zweite elektrisch leitfähige Lage (32) die untere Oberfläche (12) berührt und mit den zweiten Polen (22) jeder Batterieeinheit (20), die zu der unteren Oberfläche (12) freiliegend ausgerichtet sind, verbunden ist, um die elektrischen Ströme der Vielzahl von Batterieeinheiten (20) abzuleiten;
die zweite elektrisch isolierte wärmeleitfähige Zwischenschicht (42), ist auf die zweite leitfähige Lage (32) aufgelegt;
die zweite wärmeleitfähige Platte (52), ist auf die zweite elektrisch isolierte wärmeleitfähige Zwischenschicht (42) aufgelegt und wobei die zweite wärmeleitfähige Platte (52) die zweite seitliche Fläche (14) berührt.

14. Batterievorrichtung wie in Anspruch 13 beansprucht, wobei die zweite elektrisch leitfähige Lage (32) eine Vielzahl von elektrischen Verbindungsenden (321) umfasst, der rahmenartige Körper (10) weiterhin eine vierte seitliche Fläche (16) umfasst, die zweite elektrisch leitfähige Lage (32) sich bis zu der vierten seitlichen Fläche (16) erstreckt und die Vielzahl von elektrischen Verbindungsenden (321) zur vierten seitlichen Fläche (16) freiliegend ausgerichtet sind.

15. Batterievorrichtung wie in einem der Ansprüche 13 oder 14 beansprucht, wobei die zweite wärmeleitfähige Platte (52) nicht die erste wärmeleitfähige Platte (51) berührt.

16. Batterievorrichtung wie in den Ansprüchen 13, 14 oder 15 beansprucht, wobei die zweite wärmeleitfähige Platte (52) L-förmig ist.

17. Batterievorrichtung wie in Anspruch 14 oder in irgendeinem der Ansprüche 13 bis 16 beansprucht, wobei ein Teil der zweiten elektrisch isolierten wärmeleitfähigen Zwischenschicht (42) der zweiten wärmeleitfähigen Platte (52) ausgesetzt ist.

18. Batterievorrichtung wie in Anspruch 14 oder in irgendeinem der Ansprüche 13 bis 17 beansprucht, wobei der rahmenartige Körper weiterhin eine Vielzahl konvexer Punkte (17) besitzt, die auf der oberen Oberfläche (11) und der unteren Oberfläche (12) aufliegen, und die erste elektrisch leitfähige Lage (31) und die zweite elektrisch leitfähige Lage (32) beide eine Vielzahl von Öffnungen (322) umfasst und jede Öffnung (322) mit einem konvexen Punkt (17) entsprechend in Verbindung tritt.

19. Batterievorrichtung wie in Anspruch 14 oder in irgendeinem der Ansprüche 13 bis 18 beansprucht, wobei die zweite wärmeleitfähige Platte (52) gleichzeitig mit der unteren Oberfläche (12), der ersten seitlichen Fläche (13) und der zweiten seitlichen Fläche (14) verbunden ist.

20. Batterievorrichtung wie in Anspruch 19 oder in irgendeinem der Ansprüche 14 bis 18 beansprucht, wobei die zweite wärmeleitfähige Platte (52) U-förmig ist.

## Revendications

1. Bloc batterie (1) comprenant :
un corps de bâti (10) comprenant une surface supérieure (11) et un premier plan latéral (13) ;
une pluralité d'unités de batterie (20), logées dans le corps de bâti (10), et une première borne (21) de chaque unité de batterie (20) étant exposée sur la surface supérieure (11) ;
une première feuille électriquement conductrice (31), en contact avec la surface supérieure (11) et se raccordant avec la première borne (21) de chaque unité de batterie (20) exposée sur la surface supérieure (11) pour conduire les courants électriques de la pluralité d'unités de batterie (20) ;
un plot thermiquement conducteur électriquement isolé (41) disposé sur la première feuille conductrice (31) ; et
un premier panneau thermiquement conducteur (51), disposé sur le premier plot thermiquement conducteur électriquement isolé (41), et le premier panneau thermiquement conducteur (51) étant en contact avec le premier plan latéral (13).

2. Bloc batterie selon la revendication 1, dans lequel le corps de bâti (10) comprend en outre un deuxième plan latéral (14) opposé au premier plan latéral (13), et le premier panneau thermiquement conducteur (51) est en contact avec :
- la surface supérieure (11),
- le premier plan latéral (13), et
- le deuxième plan latéral (14),
simultanément.

3. Bloc batterie selon la revendication 1 ou 2, dans lequel le premier panneau thermiquement conducteur (51) est en forme de U.

4. Bloc batterie selon la revendication 1, 2 ou 3, dans lequel la première feuille électriquement conductrice (31) comprend une pluralité d'extrémités de connexion électrique (311), le corps de bâti (10) comprenant en outre un troisième plan latéral (15), la première feuille électriquement conductrice (31) s'étend vers le troisième plan latéral (15), et la pluralité d'extrémités de connexion électrique (311) sont exposées sur le troisième plan latéral (15).

5. Bloc batterie selon la revendication 4, ou l'une quelconque des revendications 1 à 4, dans lequel le corps de bâti (10) comprend en outre une pluralité de points convexes (17) disposés sur la surface supérieure (11), et la première feuille électriquement conductrice (31) comprend une pluralité d'ouvertures (312), et chaque ouverture (312) se met en prise avec le point convexe (17) de manière correspondante.

6. Bloc batterie selon la revendication 4 ou l'une quelconque des revendications 1 à 5, comprenant en outre une feuille de cuivre électriquement conductrice (71) raccordée avec la pluralité d'extrémités de connexion électrique (311).

7. Bloc batterie selon la revendication 4 ou l'une quelconque des revendications 1 à 6, dans lequel une partie du premier plot thermiquement conducteur électriquement isolé (41) est exposée sur le premier panneau thermiquement conducteur (51).

8. Bloc batterie selon la revendication 1 ou 2, dans lequel le premier panneau thermiquement conducteur (51) est en forme de L.

9. Bloc batterie selon la revendication 8, dans lequel la première feuille électriquement conductrice (31) comprend une pluralité d'extrémités de connexion électrique (311), le corps de bâti (10) comprend en outre un troisième plan latéral (15), la première feuille électriquement conductrice (31) s'étend vers le troisième plan latéral (15), et la pluralité d'extrémités de connexion électrique (311) sont exposées sur le troisième plan latéral (15).

10. Bloc batterie selon la revendication 8 ou 9, dans lequel le corps de bâti (10) comprend en outre une pluralité de points convexes (17) disposés sur la surface supérieure (11), et la première feuille électriquement conductrice (31) comprend une pluralité d'ouvertures (312), et chaque ouverture (312) se met en prise avec le point convexe (17), de manière correspondante.

11. Bloc batterie selon la revendication 8, 9 ou 10 comprenant en outre une feuille de cuivre thermiquement conductrice (71) raccordée avec la pluralité d'extrémités de connexion électrique (311).

12. Bloc batterie selon la revendication 8, 9, 10 ou 11, dans lequel une partie du premier plot thermiquement conducteur électriquement isolé (41) est exposée sur le premier panneau thermiquement conducteur (51).

13. Bloc batterie selon la revendication 1 ou 2, dans lequel le corps de bâti comprend en outre une surface inférieure (12) et un deuxième plan latéral (14) opposé au premier plan latéral (13), et une second borne (22) de chaque unité de batterie (20) est exposée sur la surface inférieure (12) ;
le bloc batterie (1) comprend en outre une seconde feuille électriquement conductrice (32), un second plot thermiquement conducteur électriquement isolé (42), et un second panneau thermiquement conducteur (52), dans lequel la seconde feuille électriquement conductrice (32) est en contact avec la surface inférieure (12) et se raccorde avec la seconde borne (22) de chaque unité de batterie (20) exposée sur la surface inférieure (12) pour conduire les courants électriques de la pluralité d'unités de batterie (20) ;
le second plot thermiquement conducteur électriquement isolé (42) disposé sur la seconde feuille conductrice (32) ;
le second panneau thermiquement conducteur (52) disposé sur le second plot thermiquement conducteur électriquement isolé (42), et le second panneau thermiquement conducteur (52) étant en contact avec le deuxième plan latéral (14).

14. Bloc batterie selon la revendication 13, dans lequel la seconde feuille électriquement conductrice (32) comprend une pluralité d'extrémités de connexion électrique (321), le corps de bâti (10) comprend en outre un quatrième plan latéral (16), la seconde feuille électriquement conductrice (32) s'étend vers le quatrième plan latéral (16), et la pluralité d'extrémités de connexion électrique (321) est exposée sur le quatrième plan latéral (16).

15. Bloc batterie selon la revendication 13 ou 14, dans lequel le second panneau thermiquement conducteur (52) n'est pas en contact avec le premier panneau thermiquement conducteur (51).

16. Bloc batterie selon la revendication 13, 14 ou 15, dans lequel le second panneau thermiquement conducteur (52) est en forme de L.

17. Bloc batterie selon la revendication 14, ou l'une quelconque des revendications 13 à 16, dans lequel une partie du second plot thermiquement conducteur électriquement isolé (42) est exposée sur le second panneau thermiquement conducteur (52).

18. Bloc batterie selon la revendication 14 ou l'une quelconque des revendications 13 à 17, dans lequel le corps de bâti comprend en outre une pluralité de points convexes (17) disposés sur la surface supérieure (11) et la surface inférieure (12), la première feuille électriquement conductrice (31) et la seconde feuille électriquement conductrice (32) comprennent toutes deux une pluralité d'ouvertures (322), et chaque ouverture (322) se met en prise avec le point convexe (17), de manière correspondante.

19. Bloc batterie selon la revendication 14 ou l'une quelconque des revendications 13 à 18, dans lequel le second panneau thermiquement conducteur (52) se raccorde à la surface inférieure (12), le premier plan latéral (13) et le second plan latéral (14) simultanément.

20. Bloc batterie selon la revendication 19 ou l'une quelconque des revendications 14 à 18, dans lequel le second panneau thermiquement conducteur (52) est en forme de U.
